# EUROPEAN PATENT APPLICATION

(11) **EP 4 804 521 A1**
(43) Date of publication of application: **09.09.2026**
(21) Application number: 25305292.2
(22) Date of filing: 05.03.2025
(51) Int. Cl.: H04N 19/119, H04N 19/167, H04N 19/176, H04N 19/55

(54) **IMPLICIT INTRA INTER PARTITIONING**

(71) Applicant: InterDigital CE Patent Holdings, SAS, 75017 Paris (FR)
(72) Inventor: GALPIN, Franck, 35235 THORIGNE-FOUILLARD (FR); BORDES, Philippe, 35890 LAILLE (FR); LE LEANNEC, Fabrice, 35830 BETTON (FR); NASER, Karam, 35250 MOUAZE (FR); ROBERT, Antoine, 35140 MEZIERES SUR COUESNON (FR)
(74) Representative: Interdigital

(57) **Abstract**

A method and an apparatus for video encoding or video decoding. A reference block is determined for a current block of the video using motion data. Responsive to a determination that the reference block comprises samples located outside a reference area of a reference frame, it is determined that the current block is predicted using a prediction mode that combines an inter prediction mode for a first partition of the current block and an intra prediction mode for a second partition of the current block. The current block is reconstructed based on the prediction mode.

## Description

### BACKGROUND

The present application is related to video compression. The present embodiments relate to a method and an apparatus for encoding or decoding an image or a video. More particularly, the present embodiments relate to coding unit partitioning in inter prediction.

To achieve high compression efficiency, image and video coding schemes usually employ prediction and transform to leverage spatial and temporal redundancy in the video content. Generally, intra or inter prediction is used to exploit the intra or inter picture correlation, then the differences between the original block and the predicted block, often denoted as prediction errors or prediction residuals, are transformed, quantized, and entropy coded. In inter prediction, motion vectors used in motion compensation are often predicted from motion vector predictor. To reconstruct the video, the compressed data are decoded by inverse processes corresponding to the entropy coding, quantization, transform, and prediction.

### BRIEF SUMMARY

Briefly stated, in one embodiment, a method for video decoding is provided wherein the method comprises determining a reference block for a current block of a video using motion data, responsive to a determination that the reference block comprises samples located outside a reference area of a reference frame, determining that the current block is predicted using a prediction mode that combines an inter prediction mode for a first partition of the current block and an intra prediction mode for a second partition of the current block, and reconstructing the current block based on the prediction mode.

In another embodiment, a method for video encoding is provided wherein the method comprises determining a reference block for a current block of a video using motion data, responsive to a determination that the reference block comprises samples located outside a reference area of a reference frame, determining that the current block is predicted using a prediction mode that combines an inter prediction mode for a first partition of the current block and an intra prediction mode for a second partition of the current block, and encoding the current block based on the prediction mode.

In another embodiment, an apparatus is provided that comprises one or more processors configured to determine a reference block for a current block of a video using motion data, responsive to a determination that the reference block comprises samples located outside a reference area of a reference frame, determine that the current block is predicted using a prediction mode that combines an inter prediction mode for a first partition of the current block and an intra prediction mode for a second partition of the current block, and reconstruct the current block based on the prediction mode.

In another embodiment, an apparatus is provided that comprises one or more processors configured to determine a reference block for a current block of a video using motion data, responsive to a determination that the reference block comprises samples located outside a reference area of a reference frame, determine that the current block is predicted using a prediction mode that combines an inter prediction mode for a first partition of the current block and an intra prediction mode for a second partition of the current block, and encode the current block based on the prediction mode.

One or more embodiments also provide a computer program comprising instructions which when executed by one or more processors cause the one or more processors to perform any one of the methods for encoding or decoding a video according to any of the embodiments described herein. One or more of the present embodiments also provide a non-transitory computer readable medium and/or a computer readable storage medium having stored thereon instructions for encoding or decoding a video according to the methods described herein. One or more embodiments also provide a computer readable storage medium having stored thereon a bitstream generated according to the methods described herein. One or more embodiments also provide a method and apparatus for transmitting or receiving the bitstream generated according to the methods described above.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:
FIG. 1 is a block diagram illustrating an example system according to one or more embodiments of the present disclosure;
FIG. 2 is a block diagram illustrating an example video encoder according to one or more embodiments of the present disclosure;
FIG. 3 is a block diagram illustrating an example video decoder according to one or more embodiments of the present disclosure;
FIG. 4 illustrates an example of angular intra prediction modes in VVC.
FIG. 5 illustrates an example of a flowchart of a matrix-based intra prediction (MIP) mode.
FIG. 6 illustrates an example of template for gradient analysis in intra prediction mode derivation;
FIG. 7 illustrates an example of convolution of a 3x3 Sobel gradient filer with the template;
FIG. 8 illustrates an example of a DIMD (decoder size intra mode derivation) design in ECM 13.0
FIG. 9 illustrates an example of DIMD design for small blocks;
FIG. 10 illustrates an example of quantized angle parameter ϕi (left) and quantized offset parameter ρi (right);
FIG. 11 illustrates examples of the 64 supported GPM partitioning modes grouped by identical angle index i; the offset indices j in each subfigure vary in the range of {0 ... 3}; the removed redundant quantized offsets are illustrated by dotted lines;

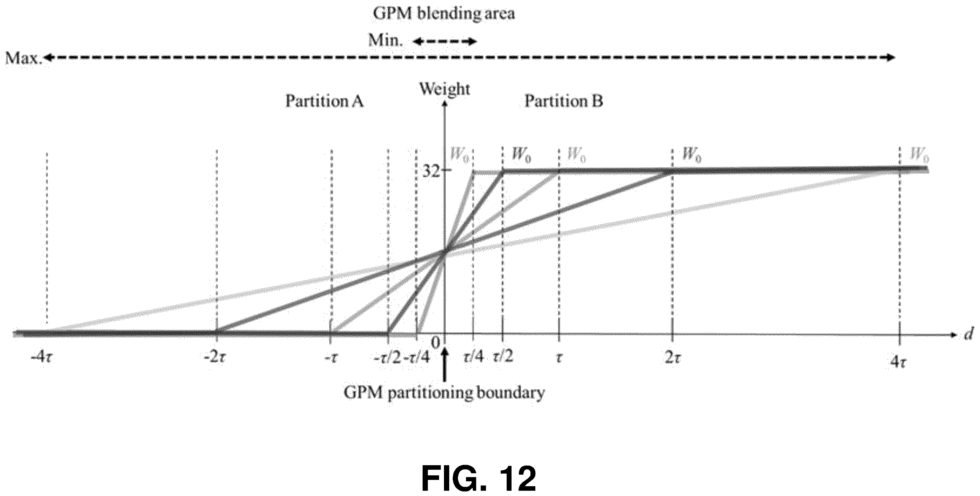

FIG. 12 illustrates examples of ramp function for the weights for GPM blending based on the displacement (d) from a predicted sample position to the GPM partitioning boundary and the blending area size (τ);
FIG. 13 illustrates examples of splitting of the current block according to an embodiment;
FIG. 14 illustrates an example of triple tree splitting of the current block according to another embodiment;
FIG. 15 illustrates an example of spatial geometry splitting of the current block according to another embodiment;
FIG. 16 illustrates examples of splitting of the current block according to another embodiment when the reference block is at a corner of the reference frame;
FIG. 17 illustrates examples of splitting strategy of the current block according to an embodiment;
FIG. 18 illustrates examples of splitting strategy of the current block according to another embodiment;
FIG. 19 illustrates an example of coefficients spreading over 2 Transform units according to an embodiment;
FIG. 20 illustrates an example of a method for encoding or decoding a block of a video according to an embodiment;
FIG. 21 illustrates an example of a method for encoding a block of a video according to another embodiment;
FIG. 22 illustrates an example of a method for decoding a block of a video according to another embodiment;
FIG. 23 and FIG. 24 illustrates an example of a method for determining an implicit intra prediction mode according to an embodiment.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

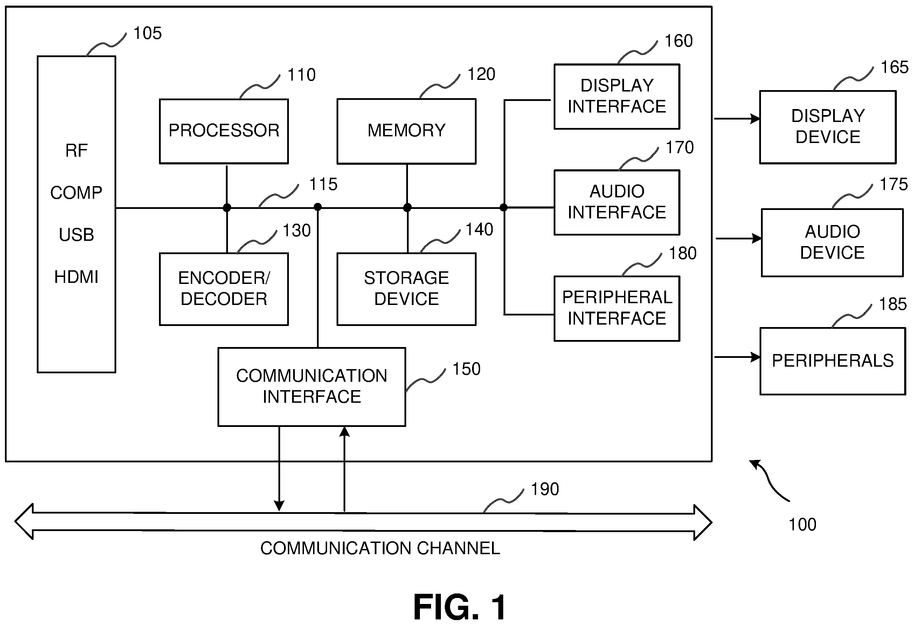

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 includes at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 includes at least one memory 120, for example, a volatile memory device and/or a non-volatile memory device. The system 100 includes a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 includes an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 is used to store instructions and/or provide working memory for video encoding and decoding functions. In some embodiments, memory external to the processor 110 and/or the encoder/decoder module 130 (e.g., the memory 120 and/or the storage device 140) is used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 includes a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

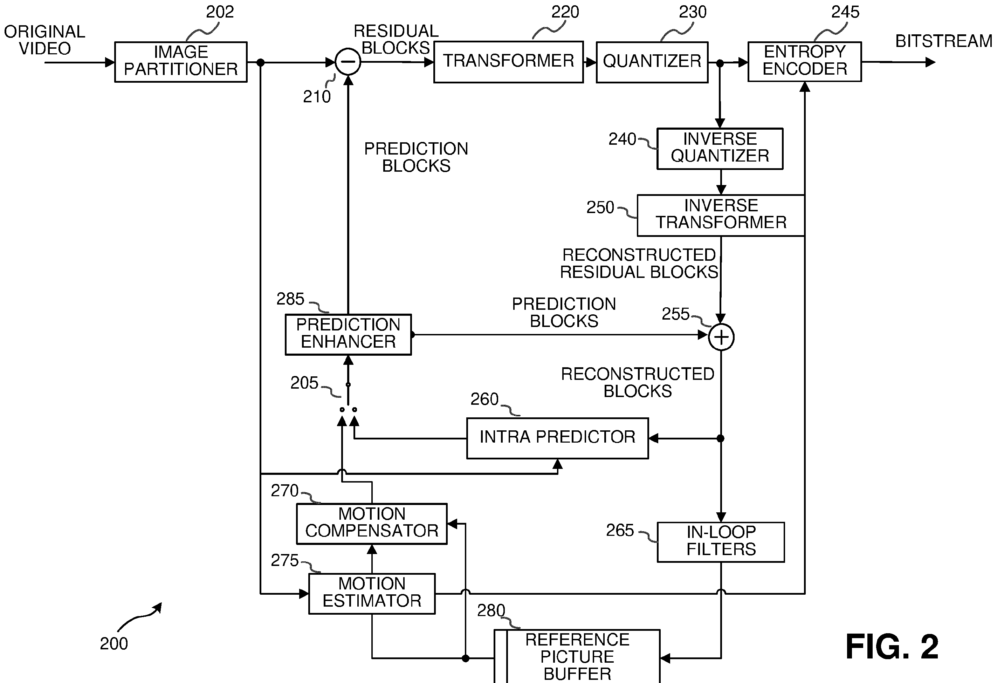

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (VVC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

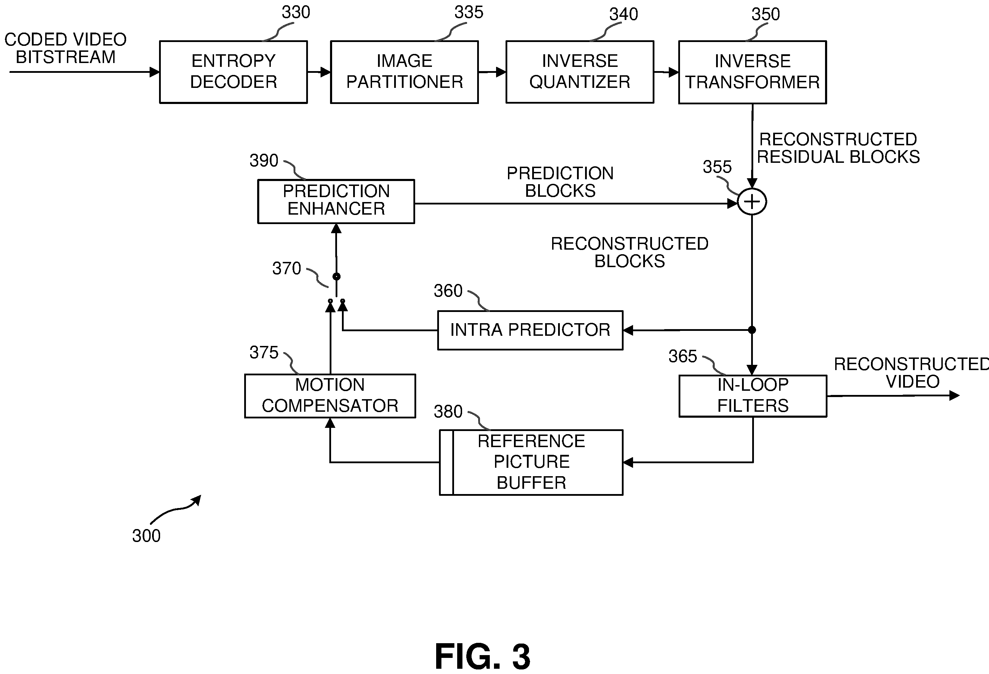

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, *Y*, and chroma components, *U* and *V* (also denoted herein by *C*).

Referring generally to FIG. 2 and the video encoder 200, video data (e.g., one or more video frames) is encoded generally as described below. Prior to encoding, video data may be pre-processed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU includes a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (i.e., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340, and inverse transformed by an inverse transformer 350 to decode (reconstruct) respective residual blocks. Depending on the selected prediction mode, a predicted block can be obtained at 370 from an intra predictor 360 (i.e., intra prediction) or from a motion compensator 375 (i.e., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

Some intra prediction modes that can be implemented in the video encoder of FIG. 2 and video decoder of FIG. 3 described above are described below.

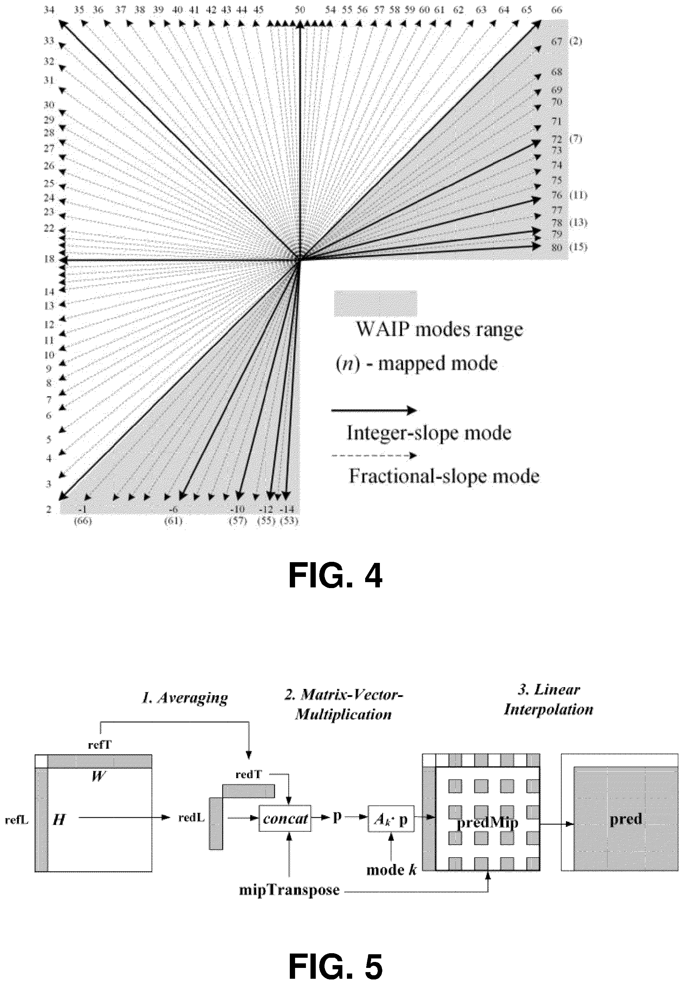

To capture the arbitrary edge directions presented in natural video, ECM features 65 directional intra prediction modes as in the VVC standard (*Versatile Video Coding, Standard ITU-T H.266, ISO*/*IEC 23090-3, 2020).* For predicting blocks with smoothly varying textures, the PLANAR and DC modes are used. Directional intra prediction modes (IPM) as used in VVC are illustrated on FIG. 4, which also shows wide angular modes. These modes are also called in the document angular intra modes.

When used, TIMD (Template-based Intra Mode Derivation) is applied the same way on the encoder and decoder sides. For each intra prediction mode in the MPM (Most Probable Modes) list of a current block to encode or decode, if needed, supplemented with default modes, a prediction of the template of the current block is determined from the decoded reference samples of the template, and the SATD (Sum of Absolute Transformed Differences) between this prediction and the template of the current block is calculated. The two intra prediction modes with the minimum SATDs are selected as the TIMD modes. These TIMD modes are combined using weights derived from the SATD costs.

Intra template matching prediction (IntraTMP) is an intra prediction mode that copies a prediction block from the reconstructed part of the current frame, whose L-shaped template most closely matches the current template (template of the current block). For a predefined search range, the encoder searches for the most similar template to the current template and uses the corresponding block as a prediction block. The encoder then signals the usage of this mode, and the same prediction operation is performed at the decoder side.

In Intra Block Copy (IBC), the prediction is obtained from a reference block within the same picture indicated by a block vector.

To predict the samples of a block of width W and height H, Matrix weighted Intra Prediction (MIP) takes one line of H reconstructed neighboring boundary samples left of the block and one line of W reconstructed neighboring boundary samples above the block as input. The generation of the prediction signal is based on averaging neighboring samples, matrix vector multiplication with the averaged samples and linear interpolation. An example of a flowchart for MIP mode as implemented in VVC is illustrated on FIG. 5.

When DIMD (Decoder Side Intra Mode Derivation) is applied, up to five angular intra modes are derived from gradients determined in a template of reconstructed neighbor samples, and those five predictors are combined with the planar mode predictor with weights derived from the histogram of gradients.

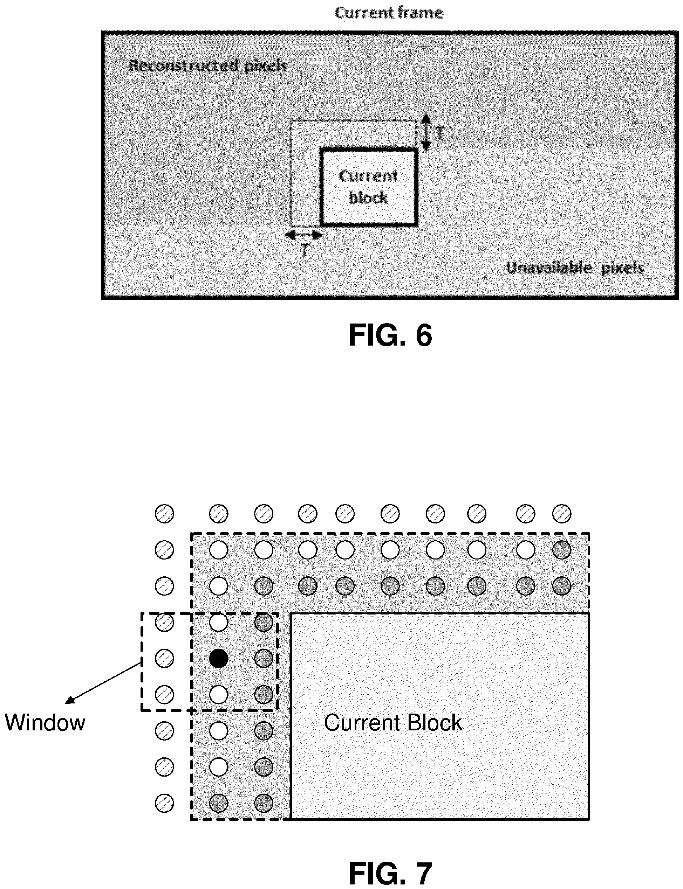

To derive the intra prediction mode for a block, a set of neighboring pixels is selected on which a gradient analysis is performed. For normativity purposes, these pixels should be in the decoded / reconstructed pool of pixels. As shown in FIG. 6, a template is chosen surrounding the current block by T pixels to the left, and T pixels above where T is set to 2.

Next, a gradient analysis is performed on the pixels of the template. This allows to determine a main angular direction for the template, which is assume that it has a high chance to be identical to the one of the current block. Thus, a simple 3x3 Sobel gradient filter is used, defined by the following matrices that will be convoluted with the template: ${G}_{x} = \left[\begin{matrix}- 1 & 0 & 1 \\ - 2 & 0 & 2 \\ - 1 & 0 & 1\end{matrix}\right] and {G}_{y} = \left[\begin{matrix}- 1 & - 2 & - 1 \\ 0 & 0 & 0 \\ 1 & 2 & 1\end{matrix}\right]$

For each pixel of the template, each of these two matrices is multiplied point-by-point with the 3x3 window centered around the current pixel and composed of its 8 direct neighbors, and the result is summed. Thus, two values are obtained Mₓ (from the multiplication with Gₓ), and M_{y} (from the multiplication with G_{y}) corresponding to the gradient at the current pixel, in the horizontal and vertical direction respectively.

FIG. 7 shows the convolution process. The black pixel is the current pixel. White pixels (including the black one) are pixels on which gradient analysis is possible. Gray pixels are pixels on which the gradient analysis is not possible due to lack of some neighbors. Hashed pixels are available (reconstructed) pixels outside of the considered template, used in the gradient analysis of the white pixels. In case a hashed pixel is not available (due to blocks being too close to the border of the picture for instance), the gradient analysis of all white pixels that use this hashed pixel is not performed.

A histogram of gradients is used for mode derivation. For each white pixel, the intensity (M) and the orientation (O) of the gradient are computed using Mₓ and M_{y} as such: $M = \left|{M}_{x}\right| + \left|{M}_{y}\right| and O = atan \left(\frac{{M}_{y}}{{M}_{x}}\right)$

Note that a fast implementation of the *atan* function can be proposed. The orientation of the gradient is then converted into an intra angular prediction mode, used to index a histogram (first initialized to zero). The histogram value at that intra angular mode is increased by M. Once all the white pixels in the template have been processed, the histogram will contain cumulative values of gradient intensities, for each intra angular mode. The mode that shows the highest peak in the histogram is selected as intra prediction mode for the current block. If the maximum value in the histogram is 0 (meaning no gradient analysis was able to be made, or the area composing the template is flat), then the DC mode is selected as intra prediction mode for the current block.

Different sizes of kernels can be used. Using a 3x3 Sobel filter to build the HoG of the current block's template may not be necessary in all the cases. In JVET-AI0140 (V. Rufitskiy et. al (TCL), " Non-EE2: On DIMD edge operators", document JVET-AI0140, 35th Meeting, Sapporo, JP, 12-19 July 2024*),* the authors proposed to use 2x2 edge detection filters to compute the HoG to reduce the number of operations to be perform and thus the DIMD runtime. These new filters are only applied to some small block size (i.e., 8x4, 4x8 and 4x4) to limit the impact on the performance.

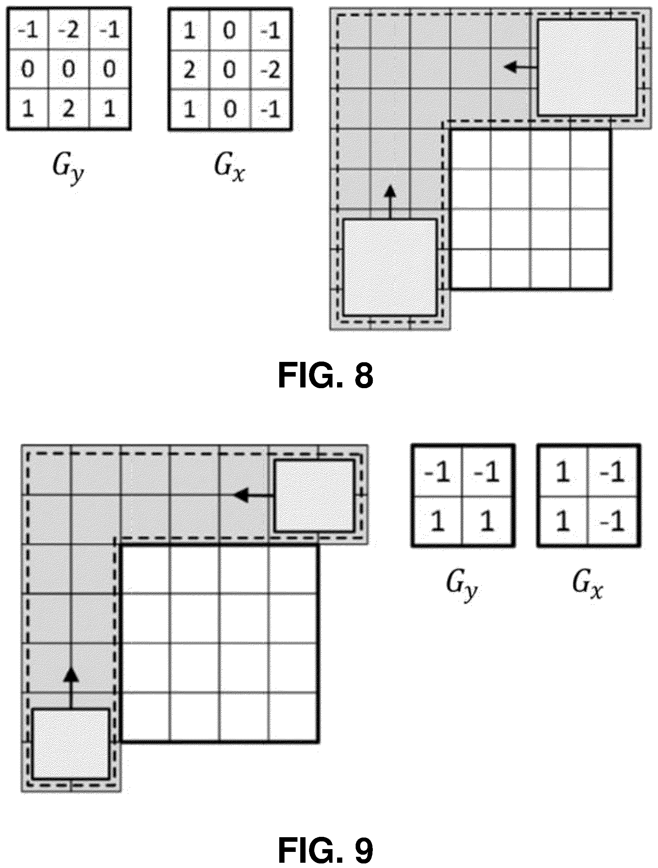

FIG. 8 shows the current set of filters used by DIMD in ECM-13.0 and FIG. 9 shows the filters proposed in JVET-AI0140 to compute the DIMD HoG for small blocks.

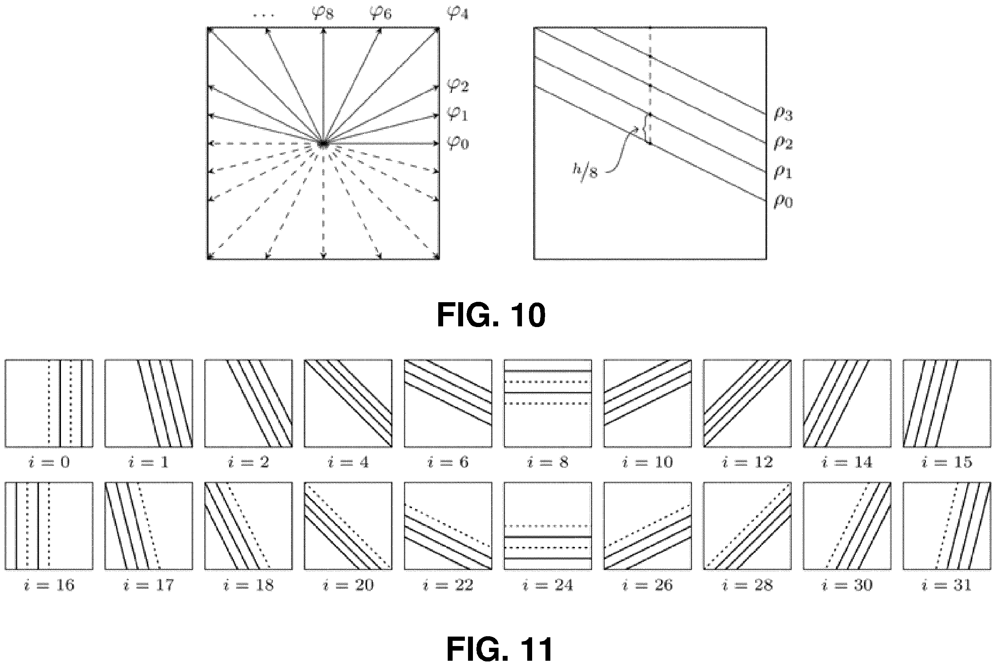

Geometry partition mode partitioning (GPM): In VVC, the geometry partition mode (GPM) may be signaled in merge mode to use non-rectangular and asymmetric rectangular partitioning, where each partition is uni directional. The location of the partitioning boundary is mathematically defined by an angle parameter φᵢ and an offset parameter ρᵢ, as shown in FIG. 10. These parameters are quantized and combined into a GPM partitioning index lookup table of 64 entries as shown in FIG. 11.

Motion vector difference (GPM-MMVD) can be signaled to adjust the selected motion vector values.

On top of VVC, ECM implements adaptive blending at 1/32 precision to smooth the transition in-between the two predictions near the split frontier as depicted in FG. 12. A CU level index is coded to signal the selected blending area size among up to 5.

The GPM split mode candidates are re-ordered based on template matching. Given the motion information of each partition, each split edge candidate is extended into the reference templates and their TM costs is evaluated to re-order the best 32 split modes as available split modes. The index of the best split mode is signaled.

Each partition may be bipredicted, where bi-directional optical flow (BDOF) based motion vector refinement is used when generating motion compensated prediction samples. At last, GPM is further extended to enable affine motion compensation (AMC).

Spatial geometric partitioning mode (SGPM) is an intra mode that resembles the inter coding tool of geometric partitioning mode (GPM), where the two prediction parts are generated from intra predicted process. In SGPM mode, a candidate list is built with each entry containing one partition split and two intra prediction modes. The candidate index selected from the list is signaled to the decoder.

When using inter prediction for a current block, a reference block in a reference frame is determined using the motion data, such as motion vector, determined for the current block. However, it may happen that the reference block provided by the motion data estimated for the current block may not fall completely inside the reference frame. When a current block is inter predicted and some part of the reference block is outside the reference frame, the inter prediction for the current block might not be the best prediction to minimize the residual cost. In the state of the art, several methods can be used to mitigate this issue. For example, the reference frame is padded: the reference frame is extended at its border (top, left, bottom and right) and the extended area is filled with some values, for example by replicating the last pixel values at the boundary. Other padding strategies can also be considered.

In another example, the samples outside the reference frame are using OOB (out of boundary) to create the inter prediction. In this case, in bi-directional motion compensation the out of boundary (OOB) prediction samples are discarded and only the non-OOB predictors, when available, are used to generate the final predictor. Specifically, let *Pos_x_{i,j}* and *Pos_y_{i,j}* denote the position of one prediction sample in one current block, $Mv _ {x}_{i , j}^{Lx}$ and $Mv _ {y}_{i , j}^{Lx}$ (x = 0,1) denote the MV of the current block; *Pos_{LeftBdry}, Pos_{RightBdry}, Pos_{TopBdry}* and *Pos_{BottomBdry}* are the positions of four boundaries of the reference frame. One prediction sample is regarded as OOB when at least one of the following conditions is satisfied: $\left(Pos_{x}_{i , j}+Mv_{x}_{i , j}^{Lx}\right) > \left({Pos}_{RightBdry}+half_pixel\right) ,$ $\left(Pos_{x}_{i , j}+Mv_{x}_{i , j}^{Lx}\right) < \left({Pos}_{LeftBdry}-half_pixel\right) ,$ $\left(Pos_{y}_{i , j}+Mv_{y}_{i , j}^{Lx}\right) > \left({Pos}_{BottomBdry}-half_pixel\right) ,$ $\left(Pos_{y}_{i , j}+Mv_{y}_{i , j}^{Lx}\right) < \left({Pos}_{TopBdry}-half_pixel\right)$ where *half_pixel* is equal to 8 that represents the half-pel sample distance in the 1/16-pel sample precision. After examining the OOB condition for each sample, the final prediction samples of one bi-directional block are generated as follows: If ${P}_{i , j}^{L 0}$ is OOB and ${P}_{i , j}^{L 1}$ is non-OOB, ${P}_{i , j}^{final} =$ ${P}_{i , j}^{L 1}$, else if ${P}_{i , j}^{L 0}$ is non-OOB and ${P}_{i , j}^{L 1}$ is OOB, ${P}_{i , j}^{final} = {P}_{i , j}^{L 0}$*,* else ${P}_{i , j}^{final} = \left({P}_{i , j}^{L 0}+{P}_{i , j}^{L 1}+1\right) >$ > 1.

In both cases described above, the prediction is computed using a motion compensation with samples outside the reference frame.

Some embodiments described herein provide for handling the samples outside the reference frame, or outside the OOB region, differently by automatically splitting the current block and creating a prediction also using intra type based prediction.

In other words, when it is determined that at least one part of the reference block of the current block is located outside the reference frame, the current block is split into at least two partitions with one partition that is inter predicted and the other partition that is intra predicted.

The current block is split such that the splitting line is as close as possible to the reference frame's boundary. The split of the current block is done such as to keep all inter part in the reference frame or the closest to the reference frame's boundary.

Depending on variants, the split line can be inside or outside the reference frame.

Triple split can be used if non asymmetric binary tree is available by the encoder, or the split can be a geometry splitting as in GPM.

The splitting can apply to prediction unit only, that is only one TU is transmitted or the splitting can be CU-based (CU split into sub-CUs).

To determine the intra prediction mode for the partition that is outside the reference frame, intra prediction mode can be determined using directional intra based on automatic direction extraction from inter part with constraint on the directions (flip/mirror), or using matrix based intra coding, or template based method, or CIIP like/blended prediction that uses part of motion compensation and intra prediction or a DIMD/TIMD like process on the inter part to recover the direction.

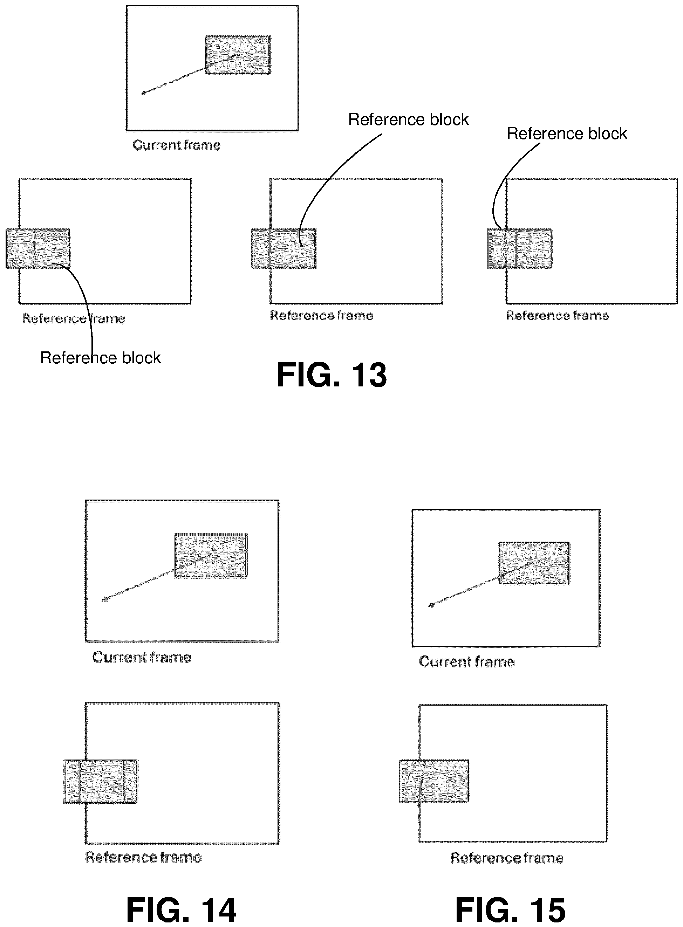

FIG. 13 illustrates examples of splitting of a current block when the reference block pointed by the motion vector of the current block is at least partly outside the reference frame.

In the figures showing examples of splitting, the splitting is shown on the reference block in the reference frame for easier understanding and illustration, it is understood that the same splitting is applied to the current block as the reference block corresponds to the current block displaced by the motion data in the reference frame.

In FIG. 13, for a current block, when part of the reference block is outside the reference frame, the current block is automatically split into 2 blocks or partitions A and B. The part inside the reference frame (part B in FIG. 13) is predicted using the inter mode signaled for the current block while the part outside (part A in FIG. 13) is predicted using an implicit intra mode. Therefore, in the embodiments described herein, when it is determined that part of the reference block is outside the reference frame, the current block is predicted using a prediction mode that combines an inter prediction mode for a first partition (B) and an intra prediction mode for the second partition (A).

In an embodiment, the reconstruction of the inter part (partition B) is done first (even when the outside part is at the left of block). In this way, the reconstructed samples of the partition B can be used to determine and infer the intra prediction mode for the partition A.

The intra prediction mode is adapted to take into account the fact that the reference samples might come from the right or the bottom when the partition A is on the right of the inter partition B or at the bottom of the inter partition B. New directions of intra predictions can then be used since the reference samples can be propagated from bottom to top.

Variants relating to splitting strategy are described below for reference frame border.

The location of the splitting line of the current block should correspond to the boundary of the reference frame that is crossed by the reference block. However, to ease implementations and coding of the partitions, the current block is split into 2 or more blocks in order to create blocks or partitions that have a size compatible with available block size in the codec. In other words, the partitions resulting from the splitting have a size of a coding unit, or a prediction unit or a transform unit that is allowed by the codec.

Alternatively, the current block is split into 2 sets of blocks having a size compatible with available block size in the codec, each set can comprise one or more blocks or partitions. The use of more than one block in a set can thus help to provide blocks having regular size blocks (blocks having a size allowed by the coded).

For example, in FIG. 13, for a current block of size width 128 and height 64, if the boundary is at coordinate 33 along the x axis (with 0 on the left), the following splitting strategies can be considered.

In a first variant, in the bottom left of FIG. 13, the current block is split into 2 blocks of size 64x64: A is intra coded and B is inter coded with the signaled mode.

In a second variant, shown in the middle of FIG. 13: the block A is of size 32x64, and B of size 96x64 (assuming this size is available at the codec).

In a third variant, on the right of FIG. 13: the intra part is a block "a" of size 32x64, and the inter part is composed of 2 blocks c and B that uses the same inter mode. Alternatively, the inter part is composed of a single block of size 96x64 with a TU tiling of size 32x64 and 64x64 implicitly deduced. In this variant, the blocks a c and B are obtained by 2 successive binary splits. The first split produces the block B and the second is applied on the left part which produces blocks a and c.

FIG. 14 shows another variant where a TT (triple tree) split is used. In this example, B and C blocks use the inter prediction mode with the parameter signaled for the current block (motion information etc.) while block A is implicitly predicted using an intra prediction mode.

FIG. 15 shows another variant, wherein for blocks touching the border (not a corner), the GPM mode is used. The closest GPM split with the boundaries is used if this split is closer to the reference frame's boundary compared to a binary or asymmetric binary tree split. For example, the distance between the reference frame's boundary and the GPM split is determined as a mean distance between points on the GPM split and corresponding point on the reference frame's boundary or as the distance between a middle point of the GPM split and a corresponding point on the reference frame's boundary.

Splitting strategies for corner are described below.

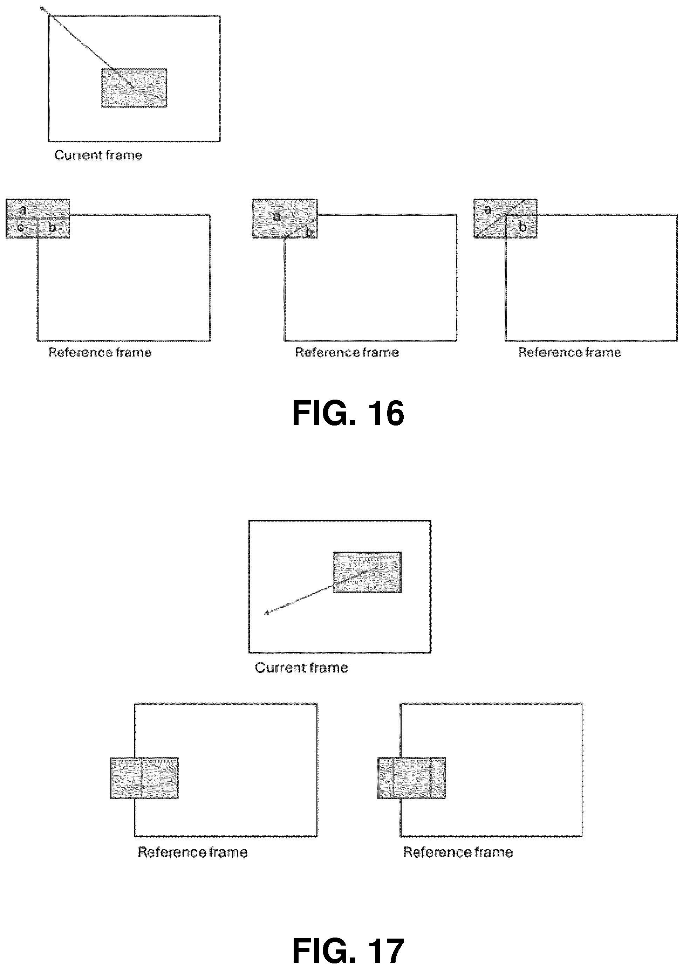

In another embodiment, the current block follows a different strategy when it covers one of the corners of the reference frame as illustrated on FIG. 16. In first variant (bottom left of FIG. 16), the current block is split into 3 blocks using 2 binary split (or asymmetric split): the block a and c are intra coded with an implicit intra prediction mode while the block b uses the signaled inter mode.

In a second variant, a GEO (GPM) boundary is created automatically (middle and right of FIG. 16) with the "a" part being intra coded and the b part being inter coded. For example, in the middle of FIG. 16, the splitting line is chosen to be the closest one from the intersection of the frame border and the current block. In another variant (right of FIG. 16), the angle of the splitting line is fixed. The angle only depends on which corner of the reference frame the current block falls on :the top-left, top-right, bottom-left or bottom-right corner. The distance of the splitting line is the smallest distance to the corner.

As described above, the splitting strategy can depend on allowed size for the partitions with respect to the location of the reference frame boundary. In another variant, the splitting strategy can depend on whether the inter part of the current block shall be complete inside the reference frame or if some part of the inter part could be outside the reference frame.

In FIG. 17, these 2 strategies to split the current block are shown. On the left of FIG. 17, the partition that is predicted in the inter prediction mode is completely kept inside the reference frame. In this variant, a binary split is chosen to split the current block with B as the inter partition and A as the implicit intra predicted partition. For the inter prediction, all reference samples are taken inside the reference frame. In this variant, there is no need for a padding of unavailable samples of the reference frame.

In another variant illustrates on FIG. 17, a TT split is chosen with B and C being partitions that are predicted using the inter prediction mode and A being the partition that is predicted by an implicit intra prediction mode. In this variant, some reference samples are taken outside the frame. In another variant, (not show on FIG. 17), the partitions B and C could be a single partition that is predicted in the inter prediction mode.

The same logic can be applied to other type of splits or corner cases already described.

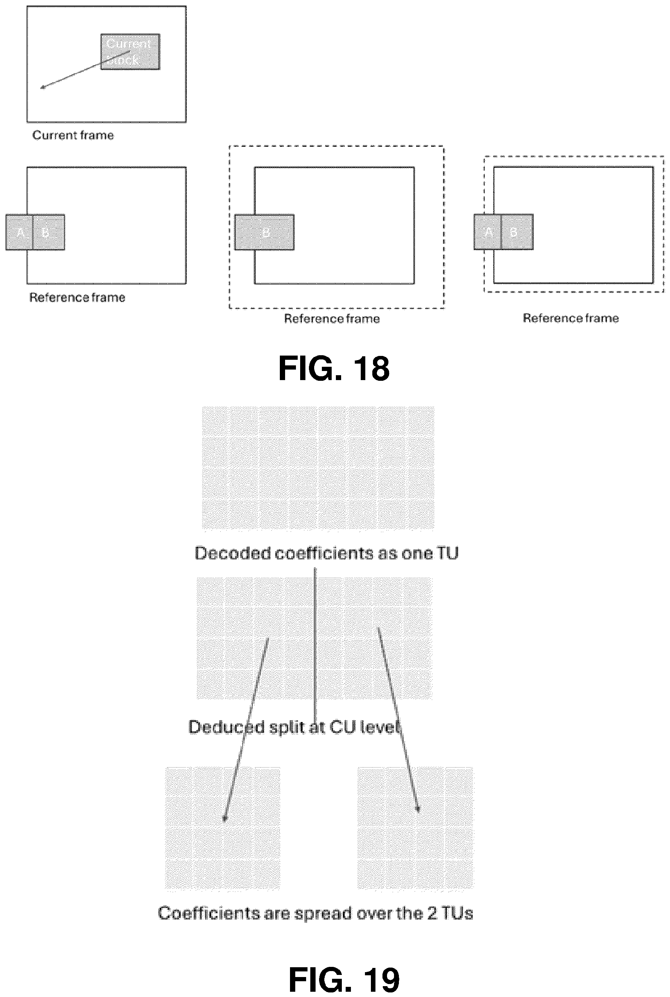

Variants relating to the split boundary are described below that can be combined with the variants described above. In FIG. 18, some variants are shown that consider the boundary which is taken into account to induce an automatic split. In the bottom left of FIG. 18, the reference frame border is used to induce the split. In this variant, as soon as some part of the current block uses outside reference samples, the implicit block splitting policy as described in the embodiments above is used.

In another variant illustrated in the middle and right of FIG. 18, a reference frame extension is used, illustrated by the dotted lines around the reference frame. For example, the reference frame extension can be a padded area or an OOB area. In this variant, the border of reference frame extension is used to induce the automatic split policy rather than the border of the reference frame. In the example shown in the middle of FIG. 18, as the current block is not outside the reference frame extension, the current block is not split. While, in the example shown on the right of FIG. 18, part of the current block goes outside the extended frame area and thus the automatic split policy is applied resulting for example in a partition A that is intra predicted and a partition B that is inter predicted.

In a variant, a fixed margin, for example 8 pixels, can be used to define the boundary location which induce the split policy. Thus, in this variant, the reference frame is extended by 8 pixels on each side.

Variants relating to splitting nature are described below.

In a variant, the block is split into several blocks and the prediction is applied as described in any variants above: with one partition that falls inside the reference frame that is inter predicted and another partition that is intra predicted. In this variant, a single TU (transform Unit) for the whole current block is used to encode, if necessary, the residuals. Therefore, in this variant, the splitting only applies to the prediction unit. The remaining steps of the encoding or decoding process applies on the whole current block.

In another variant, 2 TUs, one for each partition, are decoded but the coefficients are organized in a single TU (since the decoding process is not aware of the split) as shown in FIG. 19.

In this variant, the coefficients are parsed and decoded as if they were in a single TU (top of FIG. 19. Once, it is determined that the current block is predicted using two (or more) partitions, the split line is inferred according to one of the embodiments described above (middle of FIG. 19) and decoded coefficients are spread over the 2 TUs (bottom of FIG. 19). The inverse transforms are then applied independently on each TU to reconstruct the residual for each partition. Each partition is then reconstructed using its reconstructed residual.

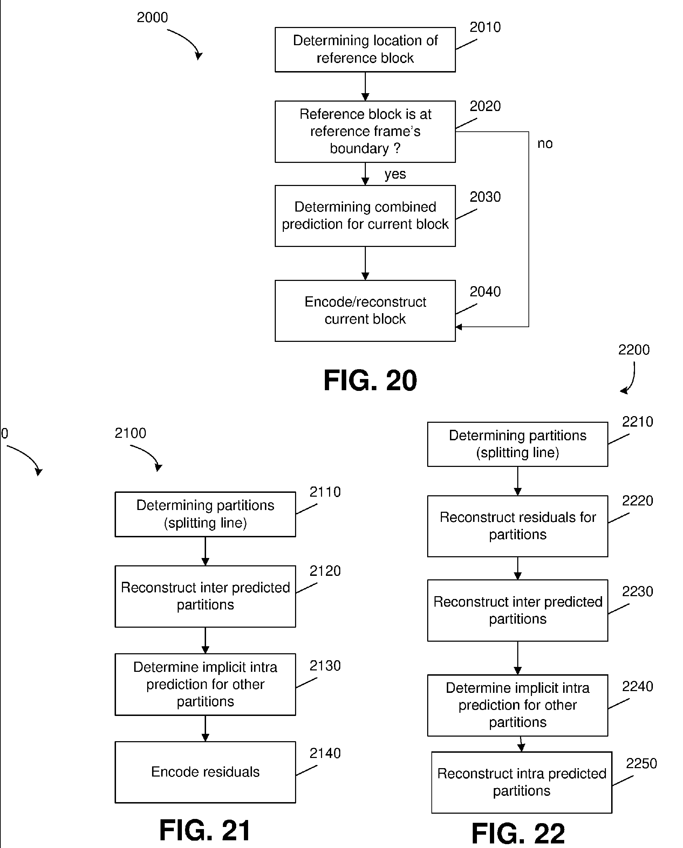

FIG. 20 illustrates an example of a method 2000 for encoding or decoding a current block of a video according to an embodiment using the automatic split policy described above. It is assumed the current block is signaled in a bitstream as encoded in an inter mode prediction and that parameters associated to the inter mode prediction are decoded, such as motion vector, index of reference frame, etc. At 2010, a reference block for the current block is determined in the reference frame using the decoded motion data. At 2020, it is determined whether the reference block is at a boundary of the reference frame. In other words, it is determined whether the reference block comprises samples located outside a reference area of the reference frame. If yes at 2020, at 2030, it is determined that the current block is predicted using a prediction mode that combines the inter prediction mode for a first partition of the current block and an intra prediction mode for a second partition of the current block. So, at 2030, the intra prediction mode is determined for the second partition of the current block. Determining the intra prediction mode for the second partition can be done as described further below.

At 2040, the current block is encoded or decoded/reconstructed using the first partition inter predicted and the second partition intra predicted. When the reference block does not fall outside the reference area of the reference frame (no at 2020), the current block is classically encoded or reconstructed in the inter prediction mode.

FIG. 21 illustrates an example of a method 2100 for encoding a current block of a video according to another embodiment. According to this embodiment, it is determined at 2030 that the current block is predicted using a prediction mode that combines the inter prediction mode for a first partition of the current block and an intra prediction mode for a second partition of the current block.

Then at 2110, the partitions are determined, that is the splitting line of the current block is determined according to one of the variants described above. Depending on the location of the reference frame boundary with respect to the reference block and the size of the current block, the current block can be split with binary splitting or triple tree split for example. At 2120, the partition that is inside the reference frame is reconstructed (for example partition B on the left of FIG. 13). The inter prediction is obtained using the reference samples of the reference block that are in the reference frame. Residual between the inter prediction and the corresponding partition of the current block is obtained, transformed and quantized. After dequantization and inverse transformed, the reconstructed residual is added to the inter prediction to reconstruct the inter partition of the current block.

At 2130, implicit intra prediction is determined for the other partition that is not in the reference frame (for example partition A on the left of FIG. 13). In a variant, a DIMD process can be used to derive an intra prediction mode for the intra partition. The DIMD process can be applied to the causal neighborhood of the current block and/or using the reconstructed samples of the inter partition of the current block. Once an intra prediction mode is derived, the intra prediction is obtained as well as residual between the intra prediction and the intra partition of the current block. At 2140, the residuals are encoded: transformed, quantized. Quantized coefficients from the inter partition and the intra partition are then entropy coded.

FIG. 22 illustrates an example of a method 2200 for decoding a current block of a video according to another embodiment. According to this embodiment, it is determined at 2030 that the current block is predicted using a prediction mode that combines the inter prediction mode for a first partition of the current block and an intra prediction mode for a second partition of the current block.

Then at 2210, the partitions are determined, that is the splitting line of the current block is determined according to one of the variants used at the encoder. Depending on the location of the reference frame boundary with respect to the reference block and the size of the current block, the current block can be split with binary splitting or triple tree split for example. At 2220, the residuals for the partitions are reconstructed (entropy decoded, dequantized and inverse transformed). At 2230, the inter partition (partition that is inside the reference frame) is reconstructed (for example partition B on the left of FIG. 13). The inter prediction is obtained using the reference samples of the reference block that are in the reference frame and residual of the inter partition are added to the inter prediction.

At 2240, implicit intra prediction is determined for the other partition that is not in the reference frame (for example partition A on the left of FIG. 13). The same process for determining the intra prediction as done at the encoder is used, for example using a DIMD process. Once an intra prediction mode is derived, the intra prediction is obtained . At 2250, the intra partition is reconstructed by adding the residual of this partition to the intra prediction.

Embodiments described above provides an implicit combined prediction mode for a block of video that is signaled in a bitstream in an inter prediction mode. This implicit combined prediction mode can be for example an implicit CIIP (Combined Intra Inter mode) with the intra and inter part deduced as described above. This implicit CIIP is not signaled explicitly at the decoder but inferred when the reference block falls on a boundary of the reference frame. As for an explicit CIIP mode, the implicit CIIP mode can use a blended prediction using the motion compensated part and the implicit intra part wherein the two predictions are blended in an area around the splitting line of the two partitions.

Other methods described below can also be used to determine the intra prediction mode for the intra partition of the current block. For the partition which is deduced to be predicted using intra coded mode, no signaling is required since the implicit split is only deduced after the decoding of the motion vectors.

As described above, the intra prediction mode can be determined using the DIMD or TIMD (Template-based intra mode derivation) like process used either on the causal neighborhood of the current block, or the reconstructed inter partitions of the current block or both.

When using the reconstructed inter partitions of the current block, in the DIMD process, the template used to derive the intra prediction mode is adapted to apply to the reconstructed samples of the inter partition, rather than the L-shape template illustrated on FIG. 7.

When only the reconstructed inter partitions of the current block are used to derive the intra prediction mode, the directions allowed for the intra partition depends on the location of the intra partition with respect to the inter partition of the current block. For example, when the intra partition is on the left side of the inter partition or on top of the inter partition, the intra mode directions (as illustrated on FIG. 4 for example) can be mirrored and or flipped to provide new intra mode directions.

In another variant, the intra prediction can be determined using the matrix based intra coding using a fixed given direction or index. For example, a default matrix is used, for example a matrix based intra coding with index 0. In another example, the matrix based intra coding can be determined using a process similar to a template intra mode derivation.

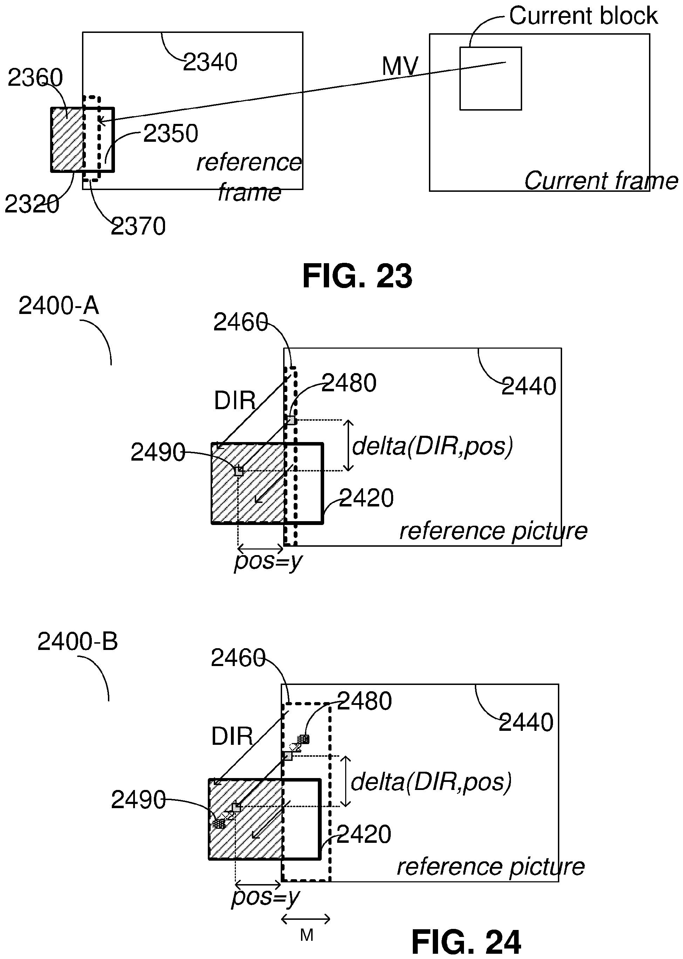

In another variant, the intra prediction can be determined using a directional intra based on automatic direction extraction from gradients of the inter part with constraint on the directions (flip/mirror) depending on the location of the intra partition with respect to the inter partition. This variant is illustrated on FIG. 23 and 24, where the intra mode direction is derived from a gradient analysis of the reconstructed boundary samples of the reference frame (2340) or on the reconstructed samples of the inter partition (2350) of the reference block (2320). The intra partition (2360) of the reference block is the hashed part show in FIG. 23. A source area (2370) is determined to process the gradients analysis. The source area is included in the reference frame and is as close as possible to the portion (2360) to be predicted.

As illustrated on FIG. 23, as the reference block (2320) intersects the reference frame area, the source area (2370) includes samples (2350) from the reference block (2320). The width (or height) of source area (2370) may be larger or smaller than the width (or height) of the inter part (2350) reference block. The gradients analysis is computed for example, using the Sobel filter to derive the dominant direction (DIR) inside the source area. The Sobel filter may be applied on the luma and/or the chroma samples.

FIG. 24 illustrates the prediction process for the intra part (2320) once the directional intra prediction DIR is determined. As illustrated on FIG. 24, a value "delta(DIR,pos)" is computed which is the relative distance between a target sample position "pos" (2490) to predict and a reference sample (2480). The value of "delta()" is determined with the angle direction DIR. The reference sample (2480) in the source area which at the picture border (2460) is copied at the position "pos" (2490). In case of sub-pel value of delta, the reference sample value may be interpolated (interpolation filter). The filling process is illustrated in FIG. 24 (2400-A).

In another variant, this directional intra based prediction may be adapted to directional mirroring prediction as depicted in 2400-B of FIG. 24, wherein the reference samples are mirrored with respect to the reference frame boundary. Note that in this case, the source area (2460) is larger (M) than one line/column of samples.

In another variant, when only the inter part of the reference block is used for deriving the direction of the intra prediction mode, the source area (2370, 2460) is limited to the samples in the reference frame that belong to the reference block. The source area can include all the samples of the reference block that are in the reference frame.

In another variant, the source area includes all the reconstructed samples of the inter partition of the current block. In this variant, the reconstructed samples distinct from the samples of the reference frame as they have been corrected with the residual coded for the inter partition of the current block.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above. One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:
i. Encoding, into coded video data, syntax elements that can enable the decoder to decode the coded video data, according to any of the embodiments described herein.
ii. A bitstream that includes one or more of the described syntax elements, or variations thereof, whether transmitted, stored, or otherwise made available.
iii. Creating, transmitting, receiving, and/or decoding of the bitstream.
iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:
i. session description protocol (SDP), for example as described in RFCs and/or used in conjunction with real-time transport protocol (RTP) transmission.
ii. hypertext transfer protocol (HTTP) live Streaming (HLS) manifest transmitted over HTTP.
iii. dynamic adaptive streaming over HTTP (DASH) media presentation description (MPD) descriptors, for example as used in DASH and transmitted over HTTP.
iv. RTP header extensions, for example as used during RTP streaming.
v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter is used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), a bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A method comprising:
determining a reference block for a current block of a video using motion data,
responsive to a determination that the reference block comprises samples located outside a reference area of a reference frame, determining that the current block is predicted using a prediction mode that combines an inter prediction mode for a first partition of the current block and an intra prediction mode for a second partition of the current block,
reconstructing the current block based on the prediction mode.

2. A method comprising:
determining a reference block for a current block of a video using motion data,
responsive to a determination that the reference block comprises samples located outside a reference area of a reference frame, determining that the current block is predicted using a prediction mode that combines an inter prediction mode for a first partition of the current block and an intra prediction mode for a second partition of the current block,
encoding the current block based on the prediction mode.

3. The method of claim 1 or 2, wherein the current block is split into at least the first partition and the second partition and wherein the first partition and the second partition have block size that provide a splitting line between the first partition and the second partition that is closest to a boundary of the reference area.

4. The method of any one of claims 1-3, wherein the first partition is predicted using the motion data and a part of the reference block that is inside the reference area of the reference frame

5. The method of any one of claims 1-4, wherein the first partition or the second partition has a block size available for at least one of a coding unit, a prediction unit or a transform unit.

6. The method of any one of claims 1-5, further comprising obtaining the first partition and the second partition for the current block by splitting the current block using at least one of a binary split, an asymmetric binary split, a triple tree split or a geometry split.

7. The method of any one of claims 1-6, wherein the current block is split by a splitting line that has a same direction as a boundary of the reference area that is intersected by the reference block.

8. The method of any one of claims 1-7, wherein the reference area corresponds to the reference frame or the reference area corresponds to an extension of the reference frame.

9. The method of any one of claims 1-8, wherein a single transform unit is used for encoding or decoding prediction residuals of the current block.

10. The method of any one of claims 1-9, wherein the intra prediction mode for the second partition is determined using reconstructed samples of the first partition.

11. The method of any one of claims 1-10, wherein the intra prediction mode for the second partition is determined using a directional intra prediction mode derived from a direction extraction from gradients on the first partition.

12. An apparatus comprising one or more processors configured to implement the method of any one of claims 1-11.
